# FASCICULE DE BREVET EUROPEEN

(11) **EP 0 834 099 B1**
(45) Date de publication et mention de la délivrance du brevet: **21.11.2001**
(21) Numéro de dépôt: 96914373.4
(22) Date de dépôt: 10.06.1996
(51) Int. Cl.: G02C 5/22

(54) **MONTURE DE LUNETTES A CHARNIERE ELASTIQUE**
BRILLENGESTELL MIT ELASTISCHEM SCHARNIER
SPECTACLES FRAME WITH A RESILIENT HINGE

(30) Priorité: 20.06.1995 FR 9507614
(43) Date de publication de la demande: 08.04.1998
(73) Titulaire: CHEVASSUS S.A., F-39400 Morez (FR)
(72) Inventeur: MALFROY, Roger, F-39400 Morez (FR); PAPILLARD, Gilles, F-39300 Monnet-la-Ville (FR)
(74) Mandataire: Moinas, Michel
(86) Numéro de dépôt international: IB9600570
(87) Numéro de publication internationale: WO9701125

(56) Documents cités:
- EP-A- 0 207 190
- EP-A- 0 596 265
- EP-A- 0 656 557
- DE-A- 4 306 502
- FR-A- 2 057 408
- FR-A- 2 111 136
- FR-A- 2 542 099

## Description

La présente invention est relative à une monture de lunettes comprenant une façade centrale sensiblement verticale lorsqu'installée sur la tête de l'utilisateur, et reliée de chaque côté par une charnière à une branche latérale horizontale d'accrochage de la monture aux oreilles.

Une charnière dite "élastique" autorise un déplacement de la branche par rotation sous tension dans un plan sensiblement horizontal d'une position dite "fermée" où cette branche est pratiquement parallèle à la façade, la monture étant prête pour rangement dans une poche ou un étui, à une position dite "ouverte" où la branche est pratiquement à angle droit, la monture étant prête pour son port. Cette charnière peut également offrir un déplacement complémentaire élastique de la branche vers l'extérieur au-delà de sa position ouverte. De telles charnières apportent alors un élément de confort dans le port de lunettes très apprécié du public, notamment du fait que les branches se plaquent contre les tempes avec une pression raisonnable.

De manière générale, une charnière est composée d'une part d'un charnon de face fixé dans un tenon latéral de façade, lequel tenon peut être droit, débordant, roulé ou coudé ; et d'autre part d'un charnon de branche relié directement ou indirectement à l'extrémité de la branche, un axe assurant la liaison entre les charnons. On parle de chamon femelle pour désigner une pièce comprenant deux oeilletons l'un au-dessus de l'autre à la manière d'une fourche, et recevant au milieu l'oeilleton unique d'un charnon mâle.

Dans un premier type de charnière élastique, la périphérie du charnon mâle présente une forme de came, notamment par la présence de deux encoches définissant respectivement les positions ouverte et fermée, came contre laquelle est poussée une bille par un ressort, tous deux installés dans un logement ménagé en vis-à-vis dans le charnon femelle. Ces charnières complexes sont décrites par exemple dans les documents FR 1 120 399 ou EP 0 137 885.

Dans un deuxième type de charnière élastique susceptible de tourner au-delà de la position d'ouverture, le charnon de branche est relié à la branche de manière télescopique par un mécanisme de rappel élastique complexe, et l'extrémité de cette branche est en appui contre le tenon situé dans son alignement. Ainsi, lors d'un mouvement de la branche au-delà de sa position ouverte, le bord intérieur de l'extrémité de la branche s'éloigne de la charnière immobile dans une sorte de rotation autour du point d'appui, mouvement qui comprime ou tend le ressort du mécanisme de rappel. A l'inverse, lors du retour de la branche vers sa position fermée, le pourtour en forme de came du charnon de face repousse le capot de logement du mécanisme, ce qui comprime ou tend à nouveau le ressort. De telles charnières compliquées sont par exemple décrites dans les documents FR 1 511 263 ou FR 2 609 816.

Le document FR 2 057 408 décrit un autre type de charnière élastique comprenant un charnon de face mâle et un charnon de branche femelle reliés par un axe. La face supérieure du charnon mâle en contact avec l'oeilleton supérieur du charnon femelle est plane, alors que la face inférieure est formée par un évidement (ou double cannelure) cruciforme interagissant avec un relief (ou bossage) à flanc oblique sur l'oeilleton inférieur du charnon femelle. Cet oeilleton inférieur est flexible vers le bas de manière à s'écarter lors de l'ouverture de la branche, le charnon mâle restant à niveau en contact avec l'oeilleton supérieur encastré dans la branche. L'élasticité de cette charnière basée sur la flexion de tout un oeilleton inférieur s'avère toutefois trop lâche dans le temps pour être fiable.

Surtout, l'inconvénient majeur de ces charnières élastiques est le fait que le départ du tenon et/ou de la branche hors de son charnon respectif est nécessairement volumineux pour y loger le mécanisme élastique. Cet aspect n'est pas particulièrement esthétique, surtout lorsque la majeure partie du tenon ou de la branche se réduit à une simple tige.

Le document EP-A-0 596 265 divulgue une charnière élastique de monture de lunettes comprenant un charnon de face et un charnon de branche qui ne sont pas susceptibles de se déplacer l'un par rapport à l'autre le long de l'axe de rotation de la charnière lorsque la branche est actionnée en rotation autour de cet axe par rapport à la face de la monture.

Selon ce document, la charnière présente également deux éléments qui possèdent chacun un relief ou un creux complémentaire et qui se déplacent l'un par rapport à l'autre suivant un axe lorsque la branche est actionnée en rotation par rapport à la face. Toutefois, l'axe de déplacement relatif de ces deux éléments est distinct et perpendiculaire à l'axe de rotation de la branche par rapport à la face.

Le but de la présente invention est une charnière élastique de monture de lunettes pouvant être reliée directement à un tenon ou une branche sans modification de l'extrémité de ces pièces, notamment du fait que le mécanisme élastique est contenu dans la charnière. Ces charnières doivent toutefois rester robustes, raisonnablement discrètes, faciles à manipuler, et d'un coût modique, notamment grâce à un nombre réduit de pièces la constituant.

Ces buts sont réalisés dans une charnière selon la revendication 1.

A priori, il était impensable d'agencer un charnon mâle "flottant" dans un charnon femelle à l'encontre d'un ressort coaxial à l'axe, ce ressort étant habituellement agencé dans l'alignement de la branche. Toutefois, après de nombreux essais en atelier, on s'est rendu compte que cet agencement est quand même possible en utilisant un petit ressort comportant seulement deux à trois spires mais dont le diamètre du fil est suffisant pour assurer une certaine raideur, ou en utilisant un ressort en spiral hélicoïdal ou d'autres agencements selon l'invention. Par contre, ce déplacement de charnon permet d'envisager une hauteur de relief plus importante pour un meilleur effet de claquement. Ceci permet aussi d'intégrer le mécanisme élastique entièrement dans la charnière, tout en réalisant une charnière de petit volume notamment lorsque fabriquée en métal. Surtout, cette charnière ne nécessite pas de surépaisseur de l'extrémité du tenon ou de branche.

Selon un premier mode de réalisation, les deux charnons sont mâles avec une face unique de contact perpendiculaire à l'axe, et présentent l'un au moins un relief radial à flanc oblique pouvant se loger dans un ou plusieurs évidements radiaux de l'autre, ces charnons peuvent s'écarter l'un de l'autre le long de l'axe de liaison contre l'effet d'un ressort coaxial.

Ce mode de réalisation à double charnon mâle permet de réaliser des charnières particulièrement efficaces tout en restant de petit volume.

Avantageusement alors, le relief est diamétral et l'évidement est cruciforme de telle sorte à définir les deux positions ouverte et fermée de la branche.

Un tel évidement cruciforme est aisément réalisé par deux rainures à angle droit réalisées par fraisage passant toutes deux par le centre du charnon. L'évidement peut être cruciforme régulier ou dissymétrique, c'est-à-dire composé de deux rainures de profondeur et/ou de largeur différentes impliquant alors une élasticité propre à chacune des deux positions.

Il en est de même pour un relief diamétral réalisé dans une pièce métallique par fraisage. Ce relief, taillé dans la masse du charnon, peut présenter une section transversale triangulaire si on désire optimiser l'effet élastique, ou une section arrondie en un demi-cylindre si on préfère diminuer les forces de frottement.

Dans le cas d'une pièce moulée en matière plastique ou en métal, on peut envisager la réalisation d'un relief cruciforme régulier complémentaire de l'évidement. Bien qu'un peu plus difficile à réaliser, un tel relief présente l'avantage d'une surface de contact oblique accrue.

En alternative, le charnon comportant le relief peut se présenter sous la forme d'une cuvette dont la paroi latérale cylindrique présente deux orifices diamétraux, et le relief est alors constitué par une goupille passant par les orifices du chamon et par un trou transversal de l'axe qui est ainsi solidarisé au charnon.

De préférence alors, le moyen élastique est un ressort inséré entre la tête de l'axe et la face externe d'un premier charnon, l'autre extrémité de l'axe étant rendue solidaire de l'autre charnon, par exemple par un filetage se coinçant dans un orifice taraudé, ou par une goupille orthogonale traversant simultanément l'axe et l'autre charnon.

Avantageusement, la tête de l'axe et le ressort sont contenus dans une cuvette-logement ménagée dans la face externe du premier charnon. Cette cuvette est relativement simple à réaliser par un simple perçage, et permet de protéger le ressort et l'axe.

Le ressort peut être hélicoïdal enfilé coaxialement autour de l'axe. La charnière élastique sera alors plutôt étroite et haute.

Pour augmenter la raideur de l'élasticité tout en diminuant la course, on peut utiliser un ressort hélicoïdal refermé sur lui-même à la manière d'un tore coaxial à l'axe.

En alternative, on peut utiliser un ressort hélicoïdal coaxial à l'axe, mais dont le diamètre de chaque spire augmente pour former un ressort conique. La course d'un tel ressort est importante du fait qu'il peut être comprimé jusqu'à ce que sa hauteur se réduise à l'épaisseur d'une spire, le ressort formant alors une ellipse. La charnière élastique sera alors plutôt large dans le plan horizontal et peu épaisse.

Selon des considérations esthétiques voulues, le tenon et la branche pourront être disposés dans le prolongement du diamètre de la charnière, ou être décalés l'un par rapport à l'autre dans le plan horizontal, l'un proche de la tempe du porteur, l'autre vers l'extérieur.

Utilement, l'une ou les deux faces de contact des charnons sont recouvertes par une rondelle épousant la forme du relief ou de l'évidement correspondant, cette rondelle étant réalisée en un matériau de dureté plus importante et/ou de frottement moindre que le matériau constituant les charnons.

Selon un second mode de réalisation, le charnon femelle se présente sous la forme d'une douille dont la paroi latérale cylindrique présente une fente en V formant deux creux supérieurs, et le charnon mâle se présente sous la forme d'une extrémité de tige de section circulaire constituant, par rapport à la fente, un relief semi-circulaire, cette extrémité de tige étant solidaire d'un disque faisant office d'axe de liaison et coulissant dans la douille, un moyen élastique agissant entre le fond de la douille et le disque.

Chacun des creux du V définit l'une des deux positions ouverte ou fermée de la charnière. Ce mode de réalisation comprend également des pièces simples faciles à usiner, et permet d'obtenir une charnière discrète adaptable directement à des extrémités de tenon ou de branche mince, la branche pouvant être réduite à une simple tige métallique.

Avantageusement, le creux définissant la position ouverte de la branche est prolongé par une petite section également oblique vers le bas autorisant un déplacement élastique de la branche au-delà de sa position ouverte.

L'invention sera mieux comprise à l'étude de modes de réalisation pris à titre nullement limitatif et décrits par les figures suivantes dans lesquelles :
- la figure 1 est une vue en perspective éclatée d'un premier mode de réalisation d'une charnière selon l'invention,
- les figures 2a et 2b sont respectivement des vues de côté et de dessus de la charnière de la figure 1 avec la branche en position ouverte,
- les figures 3a et 3b sont des vues similaires aux figures 2, mais avec la branche en position intermédiaire,
- la figure 4 est une vue en perspective éclatée d'une première variante de réalisation de la charnière selon la figure 1,
- les figures 5a, 5b, 5c et 5d sont respectivement des vues de côté et de dessus de la charnière de la figure 4, d'abord avec la branche en position ouverte, puis avec la branche en position intermédiaire,
- les figures 6a et 6b sont des vues en coupe longitudinale, respectivement frontale et latérale, d'une seconde variante de la charnière selon la figure 1,
- la figure 7 est une vue en perspective éclatée d'une troisième variante de réalisation d'une charnière selon la figure 1,
- la figure 8 est une vue en perspective éclatée d'un second mode de réalisation d'une charnière selon l'invention, et
- les figures 9a, 9b, 9c et 9d sont des vues en perspective de la charnière selon la figure 8 une fois assemblée et, respectivement, lorsque la branche est en position fermée, en position intermédiaire, en position ouverte et en position au-delà de sa position ouverte.

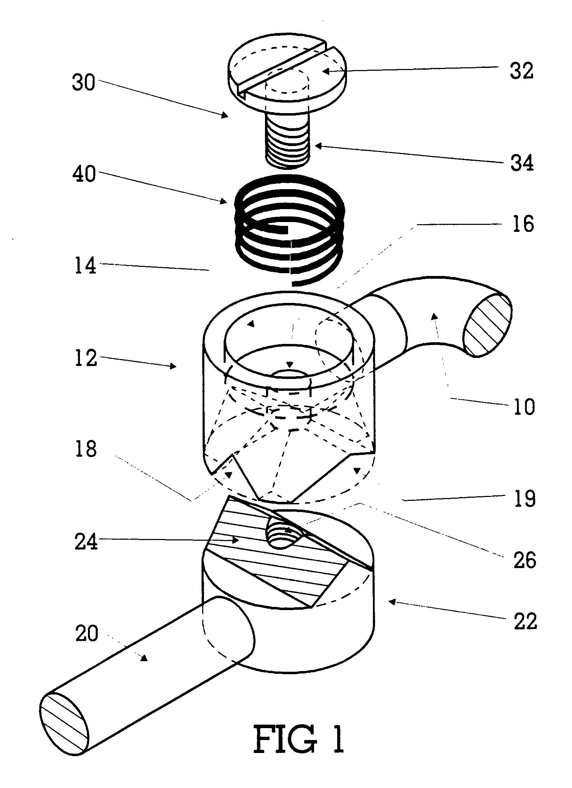

Sur les figures 1 à 3 est illustrée une charnière comprenant d'une part un charnon de face 12 solidaire d'un tenon de façade 10 fixé sur le côté d'une façade de monture de lunettes ; et d'autre part d'un charnon de branche 22 solidaire de l'extrémité d'une branche 20 dont l'autre extrémité est recourbée pour venir s'accrocher derrière l'oreille. Ces deux charnons 12 et 22 sont reliés par un axe de rotation, en l'occurrence une vis 30 dont la tête 32 vient en vis-à-vis de la face supérieure du charnon de face 12, et dont la tige filetée 34 passe au travers de l'oeilleton 16 de ce même charnon 12 pour pénétrer dans un orifice taraudé 26 central du charnon de branche 22 dans lequel cette vis est immobilisée, par exemple, par coincement du filetage dans le taraudage. D'autres dispositifs connus du maintien de la vis 30 dans la charnière, par exemple au moyen de goupille transversale, sont également applicables.

Plus particulièrement, selon l'invention, la vis 30 est plus haute que nécessaire de telle sorte à pouvoir insérer un moyen élastique d'appui 40 entre la tête 32 de la vis et la face supérieure du charnon de face 12. Tel qu'illustré sur ces figures 1 à 3, ce moyen élastique est un ressort hélicoïdal coaxial à la vis 30 située dans une cuvette de logement 14 réalisée par perçage de la face supérieure du charnon de face 12, cette cuvette étant fermée par la tête 32. Grâce à cet agencement, le charnon de face 12 est susceptible de s'écarter du charnon de branche 22 par translation le long de cette tige 34, et ce contre la compression du ressort 40.

Par ailleurs, la surface supérieure du charnon de branche 22, en contact avec la surface inférieure du charnon de face 12, présente un relief 24 qui est ici diamétral de section transversale triangulaire. En correspondance, deux évidements diamétraux perpendiculaires 18 et 19 sont réalisés dans la face inférieure du charnon de face 12. En l'occurrence, ces deux évidements présentent une section transversale également triangulaire, l'une 18 de dimension sensiblement identique à la section du relief 24, l'autre 19 présentant une base plus large.

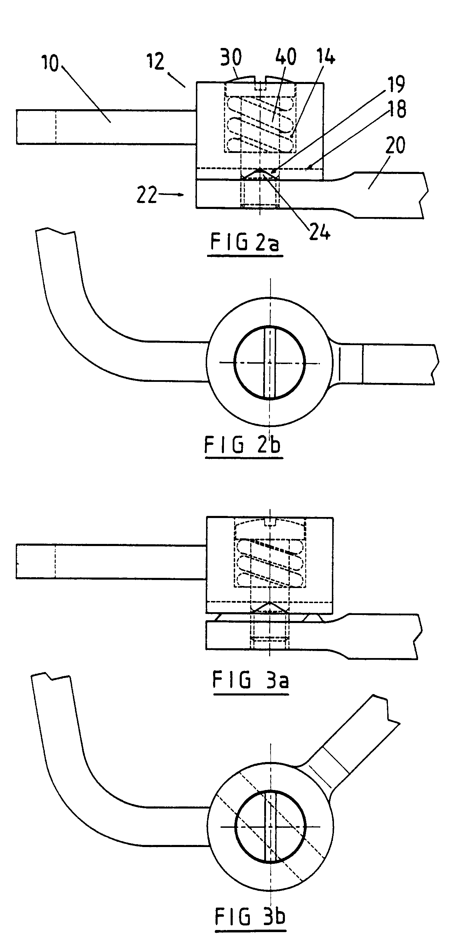

Les figures 2 illustrent la charnière lorsque la branche 20 est en position ouverte, c'est-à-dire dans le prolongement du tenon de façade 10. Dans cette position, le relief diamétral 24 du charnon de branche 22 tombe à l'intérieur de l'évidement 19. Alors les surfaces supérieure du charnon de branche 22 et inférieure du charnon de face 12 sont en contact de par l'action du ressort 40 prenant appui sous la tête 32 de la vis 30 et poussant ce charnon 12 vers le bas.

Les figures 3 illustrent comment une rotation imposée de la branche 20 par rapport au tenon 10, notamment lors d'un mouvement de la position ouverte vers la position fermée, implique une sortie du relief 24 hors de l'évidement 19 induisant une translation vers le bas du charnon 22 et de la vis 30 contre la compression du ressort. Par contre, dès que le relief 24 commence à s'engager dans l'autre évidement 18, la compression du ressort 40 favorise la remontée de ce relief dans ce second évidement, ce qui accélère l'arrivée de la branche en sa seconde position. Ce mouvement de translation en descente puis en remontée du charnon de branche 22 par rapport au charnon de face 12 est notamment possible de par l'interaction des parois obliques en correspondance du relief 24 et de l'évidement 18 ou 19.

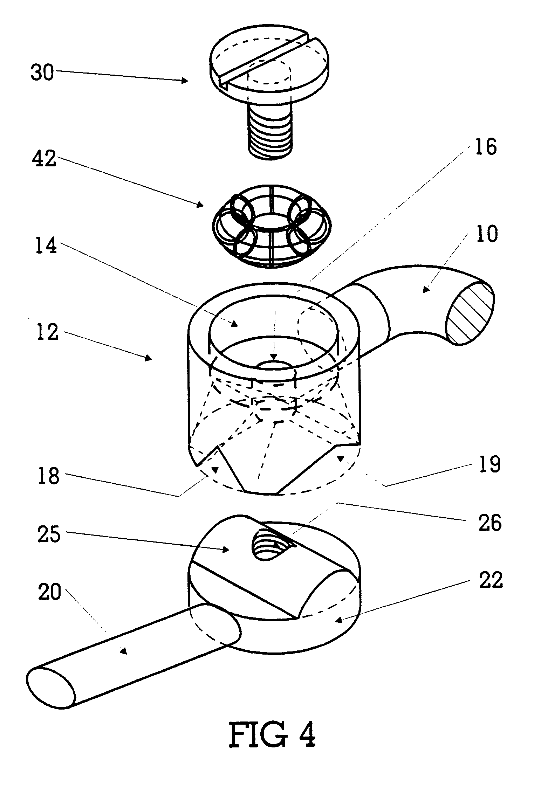

Les figures 4 à 5 illustrent une première variante de réalisation dans laquelle le relief 25 du charnon de branche 22 présente une section transversale arrondie. En d'autres termes, ce relief 25 se présente sous la forme d'un demi-cylindre coupé selon un plan médian diamétral. La course verticale du charnon de branche par rapport au charnon de face est légèrement diminuée, mais l'interaction entre le relief et l'évidement correspondant est plus souple.

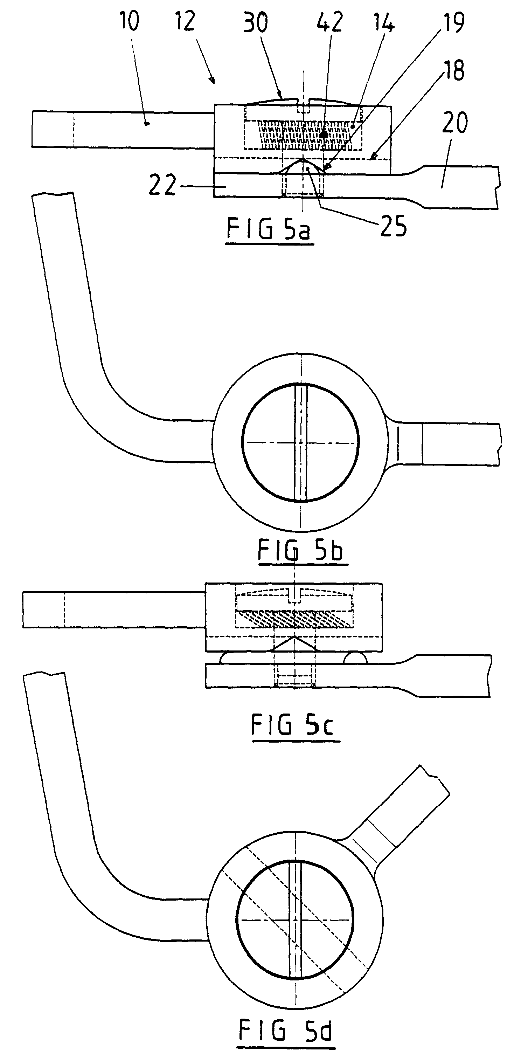

Dans cette variante de réalisation, le moyen élastique se présente sous la forme d'un ressort hélicoïdal 42 fermé sur lui-même sous la forme d'un tore enfilé autour de l'axe de la vis 30. Comme illustré de la figure 5a à 5d, la sortie du relief 25 hors de l'évidement 18 ou 19 comprime ce ressort 42 sous la forme d'un écrasement latéral de chacune des spires. Un tel ressort a l'avantage de présenter un coefficient élastique important, ce qui permet d'exercer une poussée suffisante même après une faible course de compression.

Comme mieux visible sur les figures 5, cette charnière peut se présenter alors sous une forme plus aplatie et de diamètre un peu plus large que le premier mode de réalisation de la figure 1, offrant ainsi une alternative aux stylistes composant l'esthétique générale de la monture de lunettes. Sur la figure 5b, la branche en position ouverte est illustrée dans l'alignement du diamètre de la charnière et également dans le prolongement du tenon 10. Toutefois, dans ce mode de réalisation de charnière à large diamètre, on peut parfaitement envisager que le tenon et la branche soient décalés l'un par rapport à l'autre dans le plan pour des considérations esthétiques : soit le tenon, soit la branche, étant alors plus proche de la tempe du porteur.

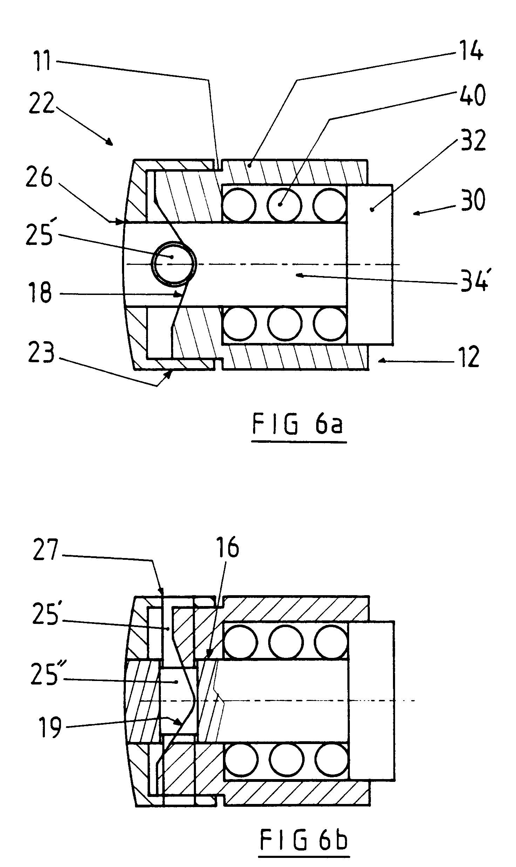

Une seconde variante, illustrée sur les figures 6a et 6b, diffère de l'exemple de la figure 1 principalement dans le mode de réalisation du charnon 22 comportant le relief, et les pièces similaires sont désignées par des références identiques. Dans cette variante, le charnon 22 est basé sur une cuvette comportant un fond percé d'un orifice central 26 et bordé d'une paroi latérale cylindrique 23. Dans cette paroi sont ménagés deux orifices diamétraux 27. En correspondance, l'axe de liaison 30 comprend une tête 32, et sa tige 34' présente un orifice transversal au lieu d'un filetage. Alors, le relief est simplement constitué par une goupille 25' traversant simultanément la paroi 23 et la tige 34', verrouillant ainsi l'axe de charnière.

Lorsque montée, la paroi 23 latérale du charnon 22 entoure le charnon 12 et l'extrémité de la tige 34' vient se loger dans l'orifice 26 pour créer un guidage complémentaire. Si désiré, on ménage dans la partie inférieure du charnon 12 un décrochement cylindrique 11 recevant la paroi 23 pour préserver un diamètre externe constant à la charnière.

La portion supérieure semi-cylindrique de la goupille 25 interagit alors, comme dans les exemples précédents, avec les évidements diamétraux perpendiculaires 18 et 19 sous l'effet du ressort 40 pour définir les deux positions de repos de la branche. Cette goupille peut présenter une partie centrale 25' proéminente formant deux épaulements qui viennent se prendre dans l'oeilleton central 16 du charnon 12. Cet épaulement permet de verrouiller cette goupille en place, tout en préservant une possibilité de démontage.

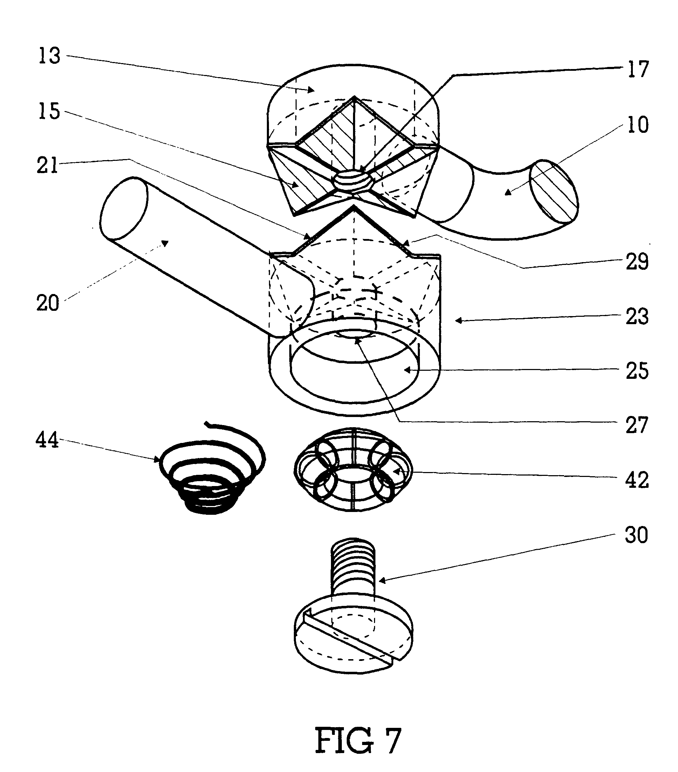

Sur la figure 7 est illustrée une troisième variante de réalisation inversée dans laquelle c'est le charnon de façade 13 qui présente un relief 15 et un orifice taraudé 17 ; alors que le charnon de branche 23 présente en sa surface supérieure un évidement 29 complémentaire au relief 15, et en sa face inférieure une cuvette-logement 25 donnant dans un oeilleton central 27 pour le passage d'une vis 30 installée cette fois-ci par en dessous.

Cette variante illustre également comment le relief 15 et l'évidement 29 peuvent tous deux être cruciformes réguliers complémentaires. En d'autres termes, ce relief correspond à l'interpénétration à angle droit de deux reliefs diamétraux triangulaires 24. Cette géométrie certes complexe, et plutôt réalisée par moulage, augmente légèrement les surfaces obliques d'interaction entre le relief 15 et l'évidement 29.

La section triangulaire du relief 15 et de l'évidement 29 peut également être arrondie pour former alors un engrenage frontal à deux fois quatre dents, la paroi cylindrique de l'orifice 17 et de l'oeilleton 27 étant alors cannelée par l'ondulation de ces dents d'engrenage.

Sur cet exemple de la figure 7 est illustré comment les surfaces de contact du charnon de face et de branche peuvent être respectivement recouvertes par une rondelle 21 épousant rigoureusement la forme du relief et de l'évidement. Cette rondelle est réalisée en un matériau tel que l'acier inox présentant une plus grande dureté et un coefficient de frottement plus faible que le plastique utilisé pour mouler une charnière selon la figure 7, ou que le maillechort dans lequel sont fraisées les charnières illustrées des figures 1 à 6.

Dans cet exemple est également illustré un troisième type de ressort susceptible d'être utilisé au sein d'une charnière selon l'invention : en l'occurrence un ressort hélicoïdal conique 44, c'est-à-dire dont le diamètre de chaque spire est supérieur à celui de la précédente. Entièrement comprimé, un tel ressort prend alors la forme d'une ellipse lui permettant de présenter une course nettement plus importante qu'un ressort hélicoïdal traditionnel.

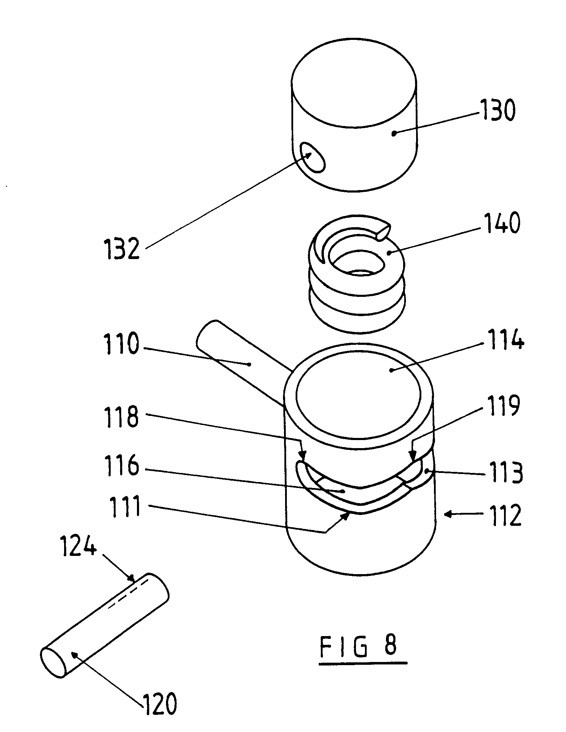

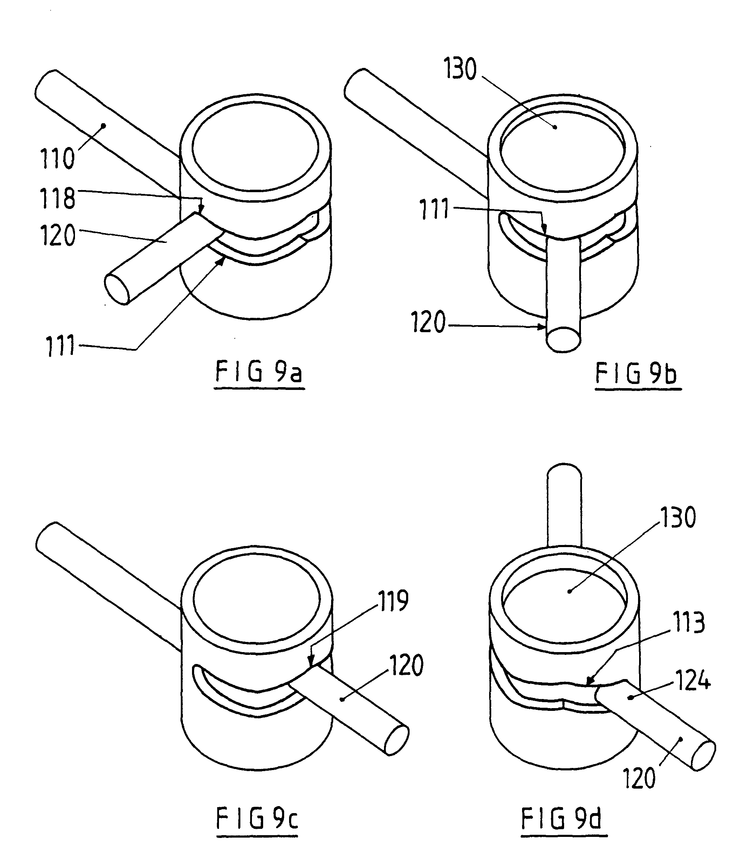

Sur les figures 8 et 9 est illustré un second mode de réalisation d'une charnière selon l'invention comprenant un charnon mâle 124/130 réalisé à l'extrémité d'une branche 120 et associé à un charnon femelle 112 solidaire d'un tenon 110, étant bien entendu que la branche et le tenon peuvent être inversés.

Plus particulièrement, le charnon 112 se présente sous la forme d'une douille comportant un fond 116 et une paroi cylindrique 114. Dans cette paroi est ménagée une fente traversante 111 en V définissant, en direction du bord supérieur ouvert, deux creux : un gauche 118 et un droit 119. Cette fente se prolonge au-delà du creux 119 par une fente oblique vers le bas 119.

En correspondance, le charnon mâle se résume à une extrémité de tige 124 de section circulaire directement engagée dans le charnon femelle, c'est-à-dire dans la fente 111 constituant l'interstice entre oeilletons, pour venir se solidariser dans un orifice 132 ménagé dans la périphérie d'un disque 130 constituant l'axe de liaison de charnière. Un ressort de compression 140 prend appui d'une part contre le fond 116 de la douille et d'autre part contre la face inférieure du disque 130 qui est susceptible de coulisser dans la douille. La partie semi-cylindrique supérieure de l'extrémité 124 de la tige constitue ainsi un relief à flanc oblique arrondi interagissant de manière souple avec la surface de contact supérieure de la fente 111/113.

Comme illustré sur la figure 9a, le creux 118 de la fente 111 en V définit la position fermée de la branche 120 par rapport au tenon 110 solidaire de la façade de monture de lunettes. La figure 9b montre comment, lorsque l'on déplace la branche 120 en rotation, l'interaction entre la fente 111 et l'extrémité de tige 124 imprime une translation vers le bas du charnon mâle, en l'occurrence du disque 130 vers le fond de la douille, et ce contre la compression du ressort interne. La figure 9c illustre comment la branche 120 remonte ensuite sous l'impulsion du ressort interne dans le second creux 119 définissant la position ouverte. Si la branche est sollicitée au-delà de sa position ouverte, alors l'extrémité 124 passe dans le prolongement 113 oblique vers le bas, ce qui abaisse à nouveau le disque 130 à l'encontre du ressort interne comme mieux visible sur la figure 9d.

De nombreuses améliorations peuvent être apportées à cette monture de lunettes à charnière élastique dans le cadre des revendications.

## Revendications

1. Charnière élastique pour monture de lunettes comprenant un charnon de face solidaire d'une façade de la monture (12, 112) et un charnon de branche solidaire d'une branche de la monture (22,124), reliés par un axe de rotation (30,130) et dont l'une de leurs faces de contact perpendiculaire à l'axe présente au moins un relief (24,124) à flanc oblique interagissant avec un ou plusieurs creux (18/19,118/119) de l'autre, **caractérisée en ce que** les charnons peuvent se déplacer l'un par rapport à l'autre le long de l'axe de rotation contre l'effet d'un moyen élastique (40,42,44) coaxial à l'axe de rotation lors de la sortie du relief hors du creux à l'occasion d'une rotation de la branche par rapport à la façade autour de l'axe de rotation.

2. Charnière élastique selon la revendication 1, **caractérisée en ce que** les deux charnons sont mâles avec une face unique de contact perpendiculaire à l'axe et présentent l'un au moins un relief radial (24,25,15) à flanc oblique pouvant se locer dans un ou plusieurs évidements radiaux (18/19,29) de l'autre.

3. Charnière élastique selon la revendication 2, **caractérisée en ce que** le relief (24,25) est diamétral, et l'évidement (18/19) est cruciforme, symétrique ou dissymétrique, de telle sorte à définir deux positions ouverte et fermée de la branche.

4. Charnière élastique selon la revendication 2, **caractérisée en ce que** l'évidement (21/29) et le relief (15) sont tous deux cruciformes réguliers complémentaires.

5. Charnière selon l'une des revendications 2 à 4, **caractérisée en ce que** la section transversale du relief est triangulaire ou semi-cylindrique.

6. Charnière selon la revendication 2, **caractérisée en ce que** le charnon comportant le relief se présente sous la forme d'une cuvette dont la paroi latérale cylindrique (23) présente deux orifices (27) diamétraux, et **en ce que** le relief est une goupille (25) passant par les orifices (27) du charnon et par un trou transversal de l'axe (34').

7. Charnière selon l'une des revendications 2 à 6, **caractérisée en ce que** le moyen élastique est un ressort (40,42,44) inséré entre la tête (32) de l'axe (30) et la face externe du charnon (12) correspondant, l'autre extrémité (34) de l'axe étant rendue solidaire de l'autre charnon (22).

8. Charnière selon la revendication 7, **caractérisée en ce que** la tête (32) de l'axe et le ressort (40,42,44) sont contenus dans une cuvette-logement (14) ménagée dans la face externe du charnon (12).

9. Charnière selon la revendication 8, **caractérisée en ce que** le ressort (42) est hélicoïdal refermé sur lui-même à la manière d'un tore coaxial à l'axe, ou hélicoïdal conique (44).

10. Charnière selon l'une des revendications 2 à 9, **caractérisée en ce que** l'une ou les deux faces de contact des charnons (23) sont recouvertes par une rondelle (21) épousant la forme du relief (29) ou de l'évidement correspondant, cette rondelle étant réalisée en un matériau de dureté plus importante et/ou de frottement moindre que le matériau constituant les charnons.

11. Charnière selon la revendication 1, **caractérisée en ce que** le charnon femelle (112) se présente sous la forme d'une douille dont la paroi latérale cylindrique (114) présente une fente (111) en V formant deux creux supérieurs (118,119), et **en ce que** le charnon mâle se présente sous la forme d'une extrémité de tige (124) de section circulaire solidaire d'un disque (130) faisant office d'axe de liaison et coulissant dans la douille, un moyen élastique (140) agissant entre le fond de la douille et le disque.

## Patentansprüche

1. Elastisches Scharnier für ein Brillengestell mit einem vorderseitigen, mit einer Fassung des Gestells verbundenen Scharnierteil (12, 112) und mit einem seitlichen, mit einem Bügel des Gestells verbundenen Scharnierteil (22, 124), die mit einer Schwenkachse (30, 130) miteinander verbunden sind und bei denen eine ihrer zu der Achse rechtwinklig ausgerichteten Kontaktflächen wenigstens eine reliefartige Struktur (24, 124) mit einer schrägen Flanke aufweist, die mit einer oder mehreren Vertiefungen (18/19, 118/119) des anderen Scharnierteils zusammenwirkt, **dadurch gekennzeichnet, dass** die Scharnierteile bei dem Austritt der reliefartigen Struktur aus der Vertiefung während einer Schwenkbewegung des Bügels relativ zu der Fassung um die Schwenkachse relativ zueinander in Richtung der Schwenkachse gegen die Wirkung eines koaxial zu der Schwenkachse angeordneten elastischen Mittels (40, 42, 44) bewegbar sind.

2. Elastisches Scharnier nach Anspruch 1, **dadurch gekennzeichnet, dass** die beiden Scharnierteile männlich mit einer einzigen, rechtwinklig zu der Achse ausgerichteten Kontaktfläche ausgebildet sind und ein Scharnierteil wenigstens eine in radialer Richtung reliefartige Struktur (24, 25, 15) mit einer schrägen Flanke aufweist, die in einer oder mehreren, in radialer Richtung ausgerichteten Vertiefungen (18/19, 29) des anderen Scharnierteils zu liegen kommt.

3. Elastisches Scharnier nach Anspruch 2, **dadurch gekennzeichnet, dass** die reliefartige Struktur (24, 25) diametral ausgerichtet ist und die Vertiefung (18/19) symmetrisch oder unsymmetrisch kreuzförmig ausgebildet ist, so dass zwei Stellungen des Bügels, eine geöffnete und eine zusammengelegte, definiert sind.

4. Elastisches Scharnier nach Anspruch 2, **dadurch gekennzeichnet, dass** die Vertiefung (21/29) und die reliefartige Struktur (15) beide zueinander komplementär regelmäßig kreuzförmig ausgebildet sind.

5. Scharnier nach einem der Ansprüche 2 bis 4, **dadurch gekennzeichnet, dass** der Querschnitt der reliefartigen Struktur dreiecksförmig oder halbzylindrisch ausgebildet ist.

6. Scharnier nach Anspruch 2, **dadurch gekennzeichnet, dass** das die reliefartige Struktur aufweisende Scharnierteil in Gestalt einer Mulde, deren zylinderförmige seitliche Wand (23) zwei diametrale Öffnungen (27) aufweist, ausgebildet ist und dass die reliefartige Struktur ein Zapfen (25) ist, der sich durch die Öffnungen (27) des Scharnierteils und durch ein transversales Loch der Achse (34') erstreckt.

7. Scharnier nach einem der Ansprüche 2 bis 6, **dadurch gekennzeichnet, dass** das elastische Mittel eine Feder (40, 42, 44) ist, die zwischen dem Kopf (32) der Achse (30) und der Außenseite des zugeordneten Scharnierteils (12) eingefügt ist, wobei das andere Ende (34) der Achse mit dem anderen Scharnierteil (22) verbunden ist.

8. Scharnier nach Anspruch 7, **dadurch gekennzeichnet, dass** der Kopf (32) der Achse und die Feder (40, 42, 44) von einem in die Außenseite des Scharnierteils (12) eingebrachten muldenförmigen Sitz (14) aufgenommen sind.

9. Scharnier nach Anspruch 8, **dadurch gekennzeichnet, dass** die Feder (42) spiralförmig in sich geschlossen nach Art eines koaxial zu der Achse ausgerichteten Torus oder konisch spiralförmig (44) ausgebildet ist.

10. Scharnier nach einem der Ansprüche 2 bis 9, **dadurch gekennzeichnet, dass** eine oder beide Kontaktflächen der Scharnierteile (23) durch eine Unterlagsscheibe (21) mit einer die Form der reliefartigen Struktur (29) oder der zugeordneten Vertiefung entsprechenden Gestalt bedeckt sind, wobei die Unterlagsscheibe aus einem härteren und/oder weniger Reibungswiderstand aufweisenden Material als das die Scharnierteile bildende Material hergestellt ist.

11. Scharnier nach Anspruch 1, **dadurch gekennzeichnet, dass** das weibliche Schamierteil (112) in der Gestalt einer Hülse ausgebildet ist, deren seitliche zylindrische Wand (114) einen zwei obere Ausnehmungen (118, 119) bildenden V-förmigen Schlitz (111) aufweist, und dass das männliche Scharnierteil in Gestalt eines Schaftendes (124) mit kreisförmigem Querschnitt ausgebildet ist, das mit einer Scheibe (130) verbunden ist, die als Verbindungsachse dient und in der Hülse gleitet, wobei zwischen dem unteren Teil der Hülse und der Scheibe ein elastisches Mittel (140) angeordnet ist.

## Claims

1. Resilient hinge for a spectacle frame comprising a front knuckle (12, 112) fixed to the front of the frame and an arm knuckle (22, 124) fixed to the arm of the frame connected by a hinge pin (30, 130), of which one of their contacting faces perpendicular to the hinge pin has at least one raised portion (24, 124) with an oblique side interacting with one or more hollows (18/19, 118/119) on the other, **characterized in that** the knuckles can move in relation to each other along the connecting hinge pin against the force exerted by a resilient device (40, 42, 44) coaxial with the hinge pin when the raised portion leaves the hollow in the event of the arm rotating with respect to the front.

2. Resilient hinge according to claim 1, **characterized in that** the two knuckles are male with a single contacting face perpendicular to the hinge pin, at least one of which has a radial raised portion (24,25,15) with an oblique side which can lodge in one or more radial recesses (18/19,29) in the other.

3. Resilient hinge according to claim 2, **characterized in that** the raised portion (24,25) is diametral and the recess (18/19) is cruciform, symmetrically or asymmetrically, so as to define the two open and closed positions of the arm.

4. Resilient hinge according to claim 2, **characterized in that** the recess (21/29) and the raised portion (15) both have regular complementary cruciform shapes.

5. Hinge according to one of claims 2 to 4, **characterized in that** the cross-section of the raised portion is triangular or semicylindrical.

6. Hinge according to claim 2, **characterized in that** the knuckle having the raised portion is in the form of a cup of which the cylindrical lateral wall (23) has two diametral orifices (27), and **in that** the raised portion is a pin (25) passing through the orifices (27) in the knuckle and through a transverse hole in the hinge pin (34').

7. Hinge according to one of claims 2 to 6, **characterized in that** the resilient device is a spring (40,42,44) inserted between the head (32) of the hinge pin (30) and the outer face of the corresponding knuckle (12), the other end (34) of the hinge pin being fixed to the other knuckle (22).

8. Hinge according to claim 7, **characterized in that** the head (32) of the hinge pin and the spring (40,42,44) are contained in a housing cup (14) provided in the outer face of the knuckle (12).

9. Hinge according to claim 8, **characterized in that** the spring (42) is in the form of a helix, closed on itself in the manner of a torus coaxial with the hinge pin, or is in the form of a conical helix (44).

10. Hinge according to one of claims 2 to 9, **characterized in that** one or both of the two contacting faces of the knuckles (23) are covered by a washer (21) matching the shape of the raised portion (29) or of the corresponding recess, this washer being made of a material which is harder and has a lower friction than the material constituting the knuckles.

11. Hinge according to claim 1, **characterized in that** the female knuckle (112) is in the form of a bush of which the cylindrical lateral wall (114) has a V-shaped slit (111) forming two upper hollows (118,119), and **in that** the male knuckle is in the form of a rod end (124) with a circular cross-section, fixed to a disc (130) acting as a connecting pin and sliding in the bush, a resilient device (140) acting between the bottom of the bush and the disc.
